# EUROPÄISCHE PATENTSCHRIFT

(11) **EP 2 528 791 B1**
(45) Veröffentlichungstag und Bekanntmachung des Hinweises auf die Patenterteilung: **25.11.2015**
(21) Anmeldenummer: 11701099.1
(22) Anmeldetag: 25.01.2011
(51) Int. Cl.: B60T 13/52, B60T 13/57, B60T 13/72

(54) **STEUERBARER PNEUMATISCHER BREMSKRAFTVERSTÄRKER UND VERFAHREN ZU DESSEN BETRIEB**
CONTROLLABLE PNEUMATIC BRAKE BOOSTER AND METHOD FOR THE OPERATION THEREOF
SERVOFREIN À COMMANDE PNEUMATIQUE ET PROCÉDÉ PERMETTANT DE FAIRE FONCTIONNER LEDIT SERVOFREIN

(30) Priorität: 15.04.2010 DE 102010027798; 29.01.2010 DE 102010001355
(43) Veröffentlichungstag der Anmeldung: 05.12.2012
(73) Patentinhaber: Robert Bosch GmbH, 70442 Stuttgart (DE)
(72) Erfinder: KOLARSKY, Jens, 74321 Bietigheim/Bissingen (DE)
(86) Internationale Anmeldenummer: PCT/EP2011/050933
(87) Internationale Veröffentlichungsnummer: WO 2011/092148

(56) Entgegenhaltungen:
- DE-A1- 4 436 819
- DE-A1-102004 041 164
- FR-A1- 2 918 333

## Beschreibung

### Stand der Technik

In Bremsanlagen eines Fahrzeugs wird zur Verzögerung des Fahrzeugs durch einen Fahrzeugführer über einen Hauptzylinder Druck in einem Bremskreis aufgebaut. Zur Unterstützung des Fahrers kann ein Bremskraftverstärker eine, gegebenenfalls zusätzliche, Unterstützungskraft aufbringen. Eine mögliche Ausführungsform eines solchen Bremskraftverstärkers ist ein Unterdruck-Bremskraftverstärker, wie er beispielsweise in der Schrift 'Kraftfahrtechnisches Taschenbuch' (25. Auflage, BOSCH, Vieweg Verlag ISBN 3528238763, Seiten 805 - 806) beschrieben ist.

Ebenfalls bekannt ist ein aktiver pneumatischer Bremskraftverstärker wie in der Schrift 'Handbuch Fahrerassistenzsysteme' dargestellt (2009, Vieweg+Teubner Verlag ISBN 978-3-8348-0287-3). Dieser Bremskraftverstärker ist fahrerunabhängig elektrisch ansteuerbar. Bei einem solchen Bremskraftverstärker wird mittels eines elektrisch betätigten Magnetantriebs das Tellerventil betätigt.

Die Offenlegungsschrift DE 10 2004 041 164, offenbart einen Bremskraftverstärker der eine elektromagnetisch betätigbare Steuerventilanordnung und eine mit der Steuerventilanordnung gekoppelte Kammeranordnung aufweist. Die Kammeranordnung weist eine Unterdruckkammer und eine über die Steuerventilanordnung fluidisch mit dieser verbindbare Arbeitskammer auf. Die Steuerventilanordnung weist ein erstes elektromagnetisch betätigbares Steuerventil aufweist, über das die Arbeitskammer mit der Atmosphäre oder einer Druckquelle verbindbar ist, sowie ein zweites elektromagnetisch betätigbares Steuerventil, über das die Arbeitskammer mit der Unterdruckkammer verbindbar ist.

### Offenbarung der Erfindung

Die vorliegende Erfindung betrifft einen Vakuum-Bremskraftverstärker sowie ein Verfahren zum Betreiben des Vakuum-Bremskraftverstärkers. Die Unterstützungskraft des erfindungsgemäßen Vakuum-Bremskraftverstärkers kann mittels eines Hauptsteuerventils sowie einer Einstelleinrichtung eingestellt werden.

Der erfindungsgemäße Bremskraftverstärker mit den Merkmalen des unabhängigen Anspruchs 1 beaufschlagt einen Hauptzylinder mit einer Unterstützungskraft. Die Unterstützungskraft kann mittels eines Hauptsteuerventils eingestellt werden. Wird die Unterstützungskraft mittels des Hauptsteuerventils eingestellt, so befindet sich der Bremskraftverstärker in einem zweiten Betriebsmodus. Ebenso kann die Unterstützungskraft mittels einer Einstellvorrichtung eingestellt werden, der Bremskraftverstärker befindet sich dann in einem ersten Betriebsmodus. Durch die Möglichkeit die Unterstützungskraft sowohl mit dem Hauptsteuerventil als auch mit der Einstelleinrichtung einzustellen ist es möglich, den Bremskraftverstärker im zweiten Betriebsmodus anhand einer durch die Geometrie und/oder die bauliche Auslegung des Bremskraftverstärkers vorgegebenen Charakteristik zu betreiben, wohin dagegen im ersten Betriebsmodus diese Charakteristik durch die Einstellvorrichtung eingestellt / verändert werden kann. Die Verstärkercharakteristik ist dabei nicht mehr alleine von der Geometrie des Bremskraftverstärkers abhängig. Unter der Charakteristik des Bremskraftverstärkers kann dabei der Zusammenhang aus Betätigungsweg des Bremspedals und vom Bremskraftverstärker aufgebrachter Unterstützungskraft verstanden werden oder auch der Zusammenhang aus Fahrerkraft und Unterstützungskraft des Bremskraftverstärkers bei einem Betätigungsweg vorgegeben durch den Fahrer. Dadurch, dass die Unterstützungskraft des Bremskraftverstärkers durch die Einstelleinrichtung eingestellt werden kann, und nicht nur über das Hauptsteuerventil, ist es in vorteilhafter Weise möglich den Bremskraftverstärker in Bremsanlagen zu verwenden, bei denen die Bremswirkung eines hydraulischen Bremssystems - in dem Bremsdruck unter anderem durch den Bremskraftverstärker aufgebaut werden kann - an die Bremswirkung eines weiteren Bremssystems angepasst werden muss. Eine solche Bremsanlage ist beispielsweise eine Bremsanlage eines Hybrid- oder Elektrofahrzeugs, welches neben einem hydraulischen Bremssystem ein weiteres, regeneratives Bremssystem umfasst. Reduziert man beispielsweise die Unterstützungskraft des Vakuumbremskraftverstärkers entsprechend der aufgebrachten regenerativen Bremswirkung, so hat das eine Verbrauchsreduzierung des Bremskraftverstärkers zur Folge, der Verschleiß verwendeter Bauteile wird reduziert.

Ebenso besteht die Möglichkeit den Bremskraftverstärker über die Einstelleinrichtung aktiv zu steuern, beispielsweise für Funktionen wie Bremsscheibenwischer oder ein Vorbefüllen von Radbremsen.

Dadurch, dass die Unterstützungskraft des Bremskraftverstärkers durch die Einstelleinrichtung und über das Hauptsteuerventil eingestellt werden kann, ist es in vorteilhafter Weise eine Rückfallebene vorhanden, falls die Einstelleinrichtung ausfällt. Diese Rückfallebene entspricht dann der Betriebsweise eines regulären Vakuum-Bremskraftverstärkers. Der erfindungsgemäße Vakuum-Bremskraftverstärker hat zum Vorteil, dass eine Unterstützungskraft bei geringer elektrischer Leistungsaufnahme eingestellt werden kann, da lediglich die Ventile mit Strom beaufschlagt werden um die Unterstützungskraft einzustellen.

Die unabhängigen Ansprüche haben vorteilhafte Ausgestaltungen und Weiterbildungen zum Inhalt.

So ist vorgesehen, die Einstelleinrichtung in vorteilhafter Weise pneumatisch mit einer ersten Kammer des Bremskraftverstärkers zu verbinden. Ebenso ist vorgesehen die Einstelleinrichtung pneumatisch mit dem Hauptsteuerventil des Vakuum-Bremskraftverstärkers zu verbinden. Auf diese Weise ist es möglich, die erste Kammer des Bremskraftverstärkers über die Einstelleinrichtung zu belüften, und somit die Unterstützungskraft einzustellen, wie im ersten Betriebsmodus vorgesehen. Über die pneumatische Verbindung zwischen Hauptsteuerventil und Einstelleinrichtung kann die erste Kammer ebenfalls belüftet werden, nur in diesem Fall über das Hauptsteuerventil.

In vorteilhafter Ausgestaltung ist die Einstellvorrichtung pneumatisch mit einer zweiten Kammer und mit einer Vakuumquelle des Bremskraftverstärkers verbunden. Dadurch, dass die Einstelleinrichtung auch mit der ersten Kammer der Bremskraftverstärkers verbunden ist, kann die der ersten Kammer zugeführte Luft wieder aus der ersten Kammer abgeführt und in die zweite Kammer und/oder zur Vakuumquelle geleitet werden. Wie oben beschrieben kann mittels der Einstelleinrichtung in vorteilhafter Weise durch Belüften der ersten Kammer eine Unterstützungskraft des Bremskraftverstärkers eingestellt werden, insbesondere diese erhöht werden. Durch die zusätzliche Verbindung mit Vakuumquelle und/oder zweiter Kammer des Bremskraftverstärkers kann die Unterstützungskraft des Bremskraftverstärkers durch Entlüften nun auch mittels der Einstelleinrichtung reduziert werden.

Des Weiteren ist vorgesehen, dass die Einstellvorrichtung erste Unterbrechungsmittel zum Unterbrechen der pneumatischen Verbindung der Einstelleinrichtung mit der Umgebung und zweite Unterbrechungsmittel zum Unterbrechen der pneumatischen Verbindung zwischen der Einstelleinrichtung und dem Hauptsteuerventil aufweist. Diese ersten und zweiten Unterbrechungsmittel können in Form von Ventilen vorgesehen sein. Die Ventile sind ansteuerbar und können somit derart gesteuert werden, dass die pneumatischen Verbindungen zwischen Einstelleinrichtung und Hauptsteuerventil sowie zwischen Einstelleinrichtung und erster Kammer den entsprechend notwendigen Ventilstellungen im ersten und zweiten Betriebsmodus entsprechen.

In einer vorteilhaften Weiterbildung ist das erste Unterbrechungsmittel ein stromlos geschlossenes, stetig stellbares Ventil und das zweite Unterbrechungsmittel ein stromlos offenes Schaltventil. Im Folgenden wird das erste Unterbrechungsmittel auch als Steuerventil und das zweite Unterbrechungsmittel als Trennventil bezeichnet.

In der vorteilhaften Ausgestaltung ist die erste Kammer des Bremskraftverstärkers mit der Einstelleinrichtung verbunden, wobei diese wiederum mit der zweiten Kammer des Bremskraftverstärkers verbunden ist. Dazu ist vorgesehen, dass die Einstelleinrichtung ein drittes Unterbrechungsmittel aufweist. Das dritte Unterbrechungsmittel ermöglicht ein Unterbrechen der pneumatischen Verbindung der zweiten Kammer des Bremskraftverstärkers mit der Einstelleinrichtung. Ein pneumatisches Übersprechen beim Belüften, also eine ungewollte Verbindung zur Vakuumquelle und/oder zweiten Kammer des Bremskraftverstärkers kann durch das dritte Unterbrechungsmittel unterbunden werden. Das dritte Ventil ist in vorteilhafter Weise ein stromlos geschlossenes Ventil. Besonders vorteilhaft ist es, wenn das stromlos geschlossene Ventil ein stetig stellbares Ventil ist. Durch das stetig stellbare Ventil kann die erste Kammer gesteuert entlüftet werden.

In vorteilhafter Ausführung weist der erfindungsgemäße Vakuum-Bremskraftverstärker erste Mittel zur Bestimmung einer Position eines Eingangselements zur Aufnahme einer vom Fahrer aufgebrachten Betätigungskraft sowie zweite Mittel zur Bestimmung einer Position eines Verstärkerkörpers in Bezug auf ein Gehäuse des Vakuum-Bremskraftverstärkers auf. Ein Fahrzeugführer gibt einen Bremswunsch meist durch Betätigen eines Pedals oder Hebels vor. Im erfindungsgemäßen Bremskraftverstärker führt das zu einer Verschiebung des Eingangselements, also zu einer Positionsänderung des Eingangselements. Ausgehend von der Ruhestellung des Eingangselements entspricht die Positionsänderung dem Absolutweg oder auch Betätigungsweg des Eingangselements. Um diesen Betätigungsweg zu bestimmen ist das erste Mittel in Form eines Positionssensors im erfindungsgemäßen Bremskraftverstärker vorgesehen. Ebenso kann ein Verschiebeweg des Verstärkerkörpers in Bezug auf das Gehäuse des Bremskraftverstärkers mittels eines weiteren Positionssensors bestimmt werden. Anhand der Signale dieser Positionssensoren lässt sich die Relativauslenkung von Eingangselement und Verstärkerkörper zueinander bestimmen. Die Relativauslenkung zwischen Verstärkerkörper und Eingangsstange ist eine Größe, über die das Verstärkungsverhältnis, also das Verhältnis zwischen Unterstützungskraft und Eingangskraft des Fahrers eingestellt werden kann.

In einer alternativen Ausgestaltung kann die relative Auslenkung von Eingangselement und Verstärkerkörper auch direkt über einen Differenzwegsensor ermittelt werden.

In einer Weiterbildung des erfindungsgemäßen Bremskraftverstärkers kann ein Differenzdrucksensor vorgesehen sein, mittels dessen Die Druckdifferenz zwischen der ersten und der zweiten Kammer des Bremskraftverstärkers ermittelt werden kann. Auch diese Größe kann zur Einstellung der Unterstützungskraft herangezogen werden.

Des Weiteren ist vorgesehen, dass die Unterstützungskraft des Bremskraftverstärker über ein Steuergerät (14) eingestellt wird, welches wenigstens die ersten (6) und zweiten (7) Unterbrechungsmittel steuert, insbesondere unter Verwendung von Signalen der ersten (8) und zweiten (9) Mittel zur Bestimmung der Position des Eingangselements (17) beziehungsweise des Verstärkerkörpers und/oder der Mittel zur Bestimmung der relativen Auslenkung und/oder der Mittel (12) zur Bestimmung des Differenzdrucks. Auf diese Weise kann im ersten und im zweiten Betriebsmodus die Stellung der Ventile der Einstelleinrichtung dem Betriebsmodus angepasst werden und durch die Ansteuerung des Steuerventils der Einstelleinrichtung im ersten Betriebsmodus die Unterstützungskraft eingestellt werden. Dazu werden im Steuergerät Signale der verwendeten Positionssensoren beziehungsweise des Differenzwegsensors und/oder des Differenzdrucksensors zur Steuerung herangezogen.

In der weiteren vorteilhaften Ausführungsform steuert das Steuergerät die ersten, zweiten und dritten Ventile um die entsprechenden Kammern des Bremskraftverstärkers zu be- und/oder entlüften. Durch Ansteuern der entsprechenden Ventile ist somit stets der in der aktuellen Fahrsituation relevante pneumatische Pfad geöffnet oder auch geschlossen.

Gemäß dem unabhängigen Anspruch, welcher das erfindungsgemäße Verfahren beschreibt ist vorgesehen, dass die Unterstützungskraft des erfindungsgemäßen Bremskraftverstärkers im ersten Betriebsmodus durch Herstellen einer pneumatischen Verbindung zwischen der Umgebung und der Einstelleinrichtung bei unterbrochener pneumatischer Verbindung zwischen der Einstelleinrichtung und dem Hauptsteuerventil eingestellt wird. Da das Hauptsteuerventil im erfindungsgemäßen Verfahren nur über die Einstelleinrichtung mit der Umgebung verbunden ist, oder werden kann, wird durch die in diesem Anspruch beschriebene technische Lehre das Hauptsteuerventil durch Unterbrechen der pneumatischen Verbindung zur Einstelleinrichtung von der Umgebung abgetrennt. Bei einem pneumatischen Bremskraftverstärker wird in der Regel eine Kammer des Bremskraftverstärkers über das Hauptsteuerventil mit Umgebungsluft versorgt, und somit eine Druckdifferenz zwischen einer ersten und einer zweiten Kammer des pneumatischen Bremskraftverstärkers eingestellt, und somit auch eine Unterstützungskraft. Wird dieses Hauptsteuerventil durch Unterbrechen der pneumatischen Verbindung außer Kraft gesetzt so kann dieses nicht mehr zur Einstellung beitragen. Somit ist es nun möglich die Unterstützungskraft durch die Einstelleinrichtung einzustellen. Dadurch ist, wie oben bereits geschildert, das Betreiben des Bremskraftverstärkers mit einer Charakteristik möglich, welche nicht oder nicht nur durch die Geometrie oder Bauliche Ausführung des Bremskraftverstärkers vorgegeben ist.

Im erfindungsgemäßen Verfahren ist vorgesehen, dass die pneumatische Verbindung zwischen der Einstelleinrichtung und dem Hauptsteuerventil beziehungsweise der Umgebung durch Steuern des Steuerventils beziehungsweise des Trennventils hergestellt oder unterbrochen wird. Da das Steuerventil ein stetig stellbares Ventil ist, sind nicht nur zwei Ventilstellungen - offen bzw. geschlossen - möglich, das Ventil kann auch derart angesteuert werden, dass es sich in eine Zwischenstellung begibt.

Im erfindungsgemäßen Verfahren ist bei der weiteren Ausführungsform vorgesehen, dass die aufgebrachte Unterstützungskraft bei unterbrochener pneumatischer Verbindung zwischen der Einstelleinrichtung und dem Hauptsteuerventil des Bremskraftverstärkers durch Herstellen von passenden pneumatischen Verbindungen eingestellt wird. Dabei wird eine pneumatische Verbindung zwischen der Umgebung und der Einstelleinrichtung hergestellt und somit die erste Kammer des Bremskraftverstärkers belüftet. Dadurch erfolgt eine Einstellung der Unterstützungskraft im Sinne eines Aufbaus der Unterstützungskraft. Des Weiteren wird eine pneumatische Verbindung zwischen der Einstelleinrichtung und der zweiten Kammer des Bremskraftverstärkers und/oder der Vakuumquelle hergestellt, wenn durch Entlüften die Unterstützungskraft reduziert werden soll. Auf Grund der Tatsache, dass die Verbindung zu dem Hauptsteuerventil unterbrochen ist, ist gewährleistet, dass die Unterstützungskraft fahrerunabhängig eingestellt wird beziehungsweise werden kann. Das Herstellen und/oder Unterbrechen der pneumatischen Verbindungen erfolgt dabei durch Steuern der ersten zweiten und dritten Unterbrechungsmittel.

Des Weiteren ist vorgesehen, dass der Zusammenhang zwischen einzustellender Unterstützungskraft sowie der Position des Eingangselements vorgegeben werden kann. Dies kann insbesondere in Form wenigstens einer Kennlinie geschehen, die in dem Steuergerät des Bremskraftverstärkers abgelegt ist. Durch das Vorsehen einer Kennlinie im Steuergerät ist es nun möglich die Charakteristik des Bremskraftverstärkers Softwareseitig einzustellen. Ebenso ist es dem Fahrzeugführer möglich eine passende Kennlinie des Bremskraftverstärkers auszuwählen, um das Bremsverhalten an Umgebungsbedingungen wie Außentemperatur, Betriebstemperatur der Bremsen bzw. der Bremsanlage, gewünschte Fahrweise, oder an die Fahrsituation anzupassen. Ebenso ist es möglich, dass die Kennlinie für weitere Größen hinterlegt ist, die entweder von den bereits genannten Größen abhängen oder die Charakteristik des Bremskraftverstärkers repräsentieren. Selbstverständlich müssen dann gegebenenfalls entsprechende Sensoren im Bremssystem vorgesehen werden.

Im zweiten Betriebsmodus ist vorgesehen, dass die Unterstützungskraft des Bremskraftverstärkers lediglich durch die Betätigung des Hauptsteuerventils eingestellt wird. Dazu ist vorgesehen, dass das Trennventil sowie das Steuerventil der Einstelleinrichtung nicht bestromt werden. Auf diese Weise kann der Bremskraftverstärker in herkömmlicher Weise betrieben werden, was eine Rückfallebene bei Stromausfall oder einem Defekt an der Einstelleinrichtung darstellt.

Gemäß der weiteren Ausführungsform ist auch das dritte Unterbrechungsmittel der Einstelleinrichtung, also das Ventil welches die Einstelleinrichtung zum Entlüften der ersten Kammer mit der zweiten Kammer und/oder der Vakuumquelle verbindet ebenfalls im stromlosen Zustand geschlossen. Somit ist auch in dieser Ausführungsform ein herkömmliches Betreiben des pneumatischen Bremskraftverstärkers möglich.

In einer weiteren Ausführungsform des erfindungsgemäßen Verfahrens ist vorgesehen den Vakuum-Bremskraftverstärker, als Teil eines hydraulischen Bremssystems zu betreiben, das Teil einer Gesamtbremsanlage ist. Die Gesamtbremsanlage weist dabei neben dem hydraulischen Teilbremssystem ein weiteres Teilbremssystem auf. Im erfindungsgemäßen Verfahren ist vorgesehen die Unterstützungskraft des Vakuum-Bremskraftverstärkers einzustellen beziehungsweise anzupassen und so die Bremswirkung des hydraulischen Teilbremssystems an eine Änderung der Bremswirkung des weiteren Teilbremssystems anzupassen.

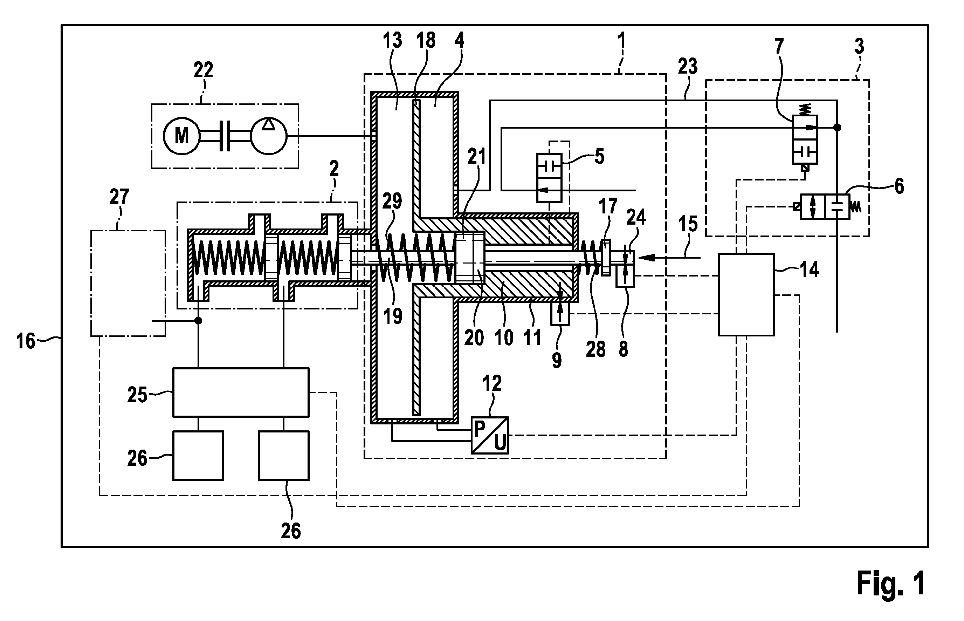

Figur 1 zeigt eine schematische Darstellung eines hydraulischen Bremssystems eines Kraftfahrzeugs in dem der erfindungsgemäße Bremskraftverstärker betrieben werden kann.

### Ausführungsform der Erfindung

Die Erfindung wird beispielhaft ein einem hydraulischen Teilbremssystem einer Gesamtbremsanlage dargestellt. Die Gesamtbremsanlage kann neben dem hydraulischen Teilbremssystem ein weiteres Teilbremssystem aufweisen, beispielsweise ein regeneratives Teilbremssystem. Das in Figur 1 dargestellte hydraulische Teilbremssystem 16 umfasst dabei einen pneumatischen Bremskraftverstärker 1, einen Hauptbremszylinder 2, ein Steuergerät 14, eine Einstelleinrichtung 3 und eine Vakuumquelle 22. Skizziert ist ein ESP-Hydraulikaggregat 25 sowie Druck-Volumen-Elemente 26, welche hier für die im Fahrzeug vorhandenen Radbremsen inklusive der Bremsleitungen stehen. Auf die Art der ESP-Einrichtung 25 und die Radbremsen 26 wird hier nicht näher eingegangen. Selbstverständlich sind unterschiedliche Bremskreisaufteilungen und unterschiedliche Ausführungen des Hydraulikaggregats beispielsweise mit Antiblockierfunktionen möglich. Der Hauptzylinder 2 kann von Fahrer und oder Bremskraftverstärker 1 mit einer Betätigungskraft beaufschlagt werden. Dadurch verschieben sich die Kolben des Hauptbremszylinders und bringen Volumen an Bremsflüssigkeit in die angeschlossenen Bremskreise ein, was zu einer Druckerhöhung in den Radbremszylindern und somit zu einer Bremswirkung für das Fahrzeug führt. Dabei kann die Druckverteilung in den Bremskreisen in bekannter Weise durch das ESP-Hydraulikaggregat moduliert/vorgegeben werden. Des Weiteren kann das hydraulische Teilbremssystem eine Anpassungsvorrichtung 27 aufweisen, welche in der Lage ist, gegebenenfalls fahrerunabhängig, dem Bremssystem Volumen an Bremsflüssigkeit zu entnehmen und/oder diesem hinzuzufügen. Eine solche Anpassungsvorrichtung kann beispielsweise aus einem Kolben mit einem Zylinder, einem Getriebe für den Kolben, sowie aus einem Motor bestehen.

Ein pneumatischer Bremskraftverstärker 1, wie in Figur 1 schematisch dargestellt, besteht im Wesentlichen aus einem Verstärkergehäuse 11 welches eine erste Kammer 4 und eine zweite Kammer 13 aufweist. Die Kammern 4 und 13 sind durch eine bewegliche Membran 18 voneinander getrennt. An dieser Membran 18 ist ein Verstärkerkörper 10 angebracht. Mittels des Verstärkerkörpers 10 kann eine Kolbenstange 19 über eine Reaktionsscheibe 20 und ein Führungsteil 21 mit einer Unterstützungskraft zur Betätigung eines Hauptbremszylinders 2 beaufschlagt werden. Der Hauptbremszylinder 2 ist hier als Tandemhauptbremszylinder gezeichnet, was nicht einschränkend für die Erfindung zu verstehen ist. Zwischen dem Führungsteil 21 und dem Hauptbremszylinder ist ein elastisches Element angebracht, beispielsweise eine Druckfeder 29. Diese Druckfeder umfasst die Kolbenstange 19. Die Druckfeder dient der Rückstellung des Führungsteils 21 und damit verbunden der Kolbenstange 19.

Die zweite Kammer 13 weist eine pneumatische Verbindung zu einer Unterdruckquelle 22 auf, in Figur 1 als Unterdruckpumpe dargestellt. Alternativ kann auch eine Verbindung zu einem Saugrohr eines Ottomotors vorgesehen sein. Die erste Kammer 4 ist über eine pneumatische Verbindung 23 mit einer Einstellvorrichtung 3 und über diese mit der Umgebungsluft verbunden. Über die Einstelleinrichtung 3 kann die Verbindung zur Umgebungsluft unterbrochen werden. Dazu weist die Einstelleinrichtung 3 ein stromlos geschlossenes, stetig stellbares Steuerventil 6 auf. Dieses Steuerventil wird durch eine Steuereinheit 14 gesteuert. Zwischen der ersten Kammer 4 und dem Steuerventil 6 verzweigt die pneumatische Verbindung 23 und verbindet die erste Kammer über stromlos geöffnetes Trennventil 7 mit einem Hauptsteuerventil 5 des Bremskraftverstärkers. Das Trennventil 7 ist ebenfalls von der Steuereinheit 14 steuerbar. Über die Verzweigung der pneumatischen Verbindung 23, das Trennventil 7 und das Hauptsteuerventil 5 kann bei Durchlassstellung der Ventile 7 und 5 die erste Kammer ebenfalls mit der Umgebungsluft verbunden werden. Bei pneumatischen Bremskraftverstärkern befinden sich in unbetätigtem Zustand die erste 4 und die zweite Kammer 13 beide auf dem selben Druckniveau, meist auf dem Unterdruckniveau der Kammer 13.

Durch die Verbindung der ersten Kammer 4 mit der Umgebungsluft, entweder über das Steuerventil 6 oder über das Hauptsteuerventil 5, strömt Umgebungsluft in die erste Kammer 4 und es stellt sich ein höherer Druck ein. Aufgrund der so entstehenden Druckdifferenz zwischen der ersten Kammer 4 und der zweiten Kammer 13 wirkt eine Kraft auf die Membran 18, genau genommen auf eine Trennwand, die hier nicht eingezeichnet ist. Diese Kraft führt dazu, dass sich der mit der Membran verbundene Verstärkerkörper 10 in Richtung des Hauptbremszylinders 2 bewegt und so die bereits erwähnte Unterstützungskraft zur Betätigung der Fahrzeugbremsen aufbringt. Auf diese Weise wird die Kraft des Bremskraftverstärkers 1 in das hydraulische Bremssystem eingebracht.

Der in der ersten Kammer 4 eingestellte Druck kann dabei an die Bremsvorgabe des Fahrers gekoppelt sein. Dazu kann das Hauptsteuerventil 5 durch den Fahrer geöffnet werden indem er eine relative Auslenkung einer Eingangsstange 24 gegenüber dem Verstärkerkörper 10 vorgibt. Ein Teil des Hauptsteuerventils kann mit der Eingangsstange 24 verschoben werden was zu einer Öffnung des Ventils führt. Ein zweiter Teil des Hauptsteuerventils 5 ist dagegen mit dem Verstärkerkörper 10 und/oder mit der Membran 18 verbunden und bewegt sich mit dieser/diesem mit.

Der pneumatische Bremskraftverstärker, wie er oben beschrieben ist, kann nun in zwei Betriebsmodi betrieben werden. Im mechanischen Modus wird der Bremskraftverstärker wie ein konventioneller pneumatischer Bremskraftverstärker betrieben, bei dem die Unterstützungskraft des Bremskraftverstärkers mittels des Hauptsteuerventils 5 eingestellt wird. 'Mechanisch' bezieht sich auf die Öffnung des Hauptsteuerventils 5 durch den Fahrer durch ein Verschieben der Eingangsstange 24 in Bezug auf den Verstärkerkörper 10. Durch das geöffnete Hauptsteuerventil 5 strömt Umgebungsluft in die erste Kammer 4. Wie bereits beschrieben, verschiebt sich dadurch die Membran 18 und der damit verbundenen Verstärkerkörper 10 in die Bewegungsrichtung der Eingangsstange 24. Das Hauptsteuerventil 5 schließt, sobald das gewünschte Kräftegleichgewicht erreicht ist. Zwischen der Eingangsstange 24 und dem elastischen Element 20 kann ein Leerweg vorgesehen sein. Dieser Leerweg ist in der in Figur 1 dargestellten Betätigungssituation des Bremskraftverstärkers überwunden. Solange dieser Leerweg nicht überwunden ist, findet kein Kraftübertrag der vom Fahrer aufgebrachten Betätigungskraft auf das elastische Element statt. In diesem Fall tritt der Fahrer lediglich gegen eine Rückstellfeder 28 sowie gegebenenfalls gegen das Ventil. Ist der Leerweg dagegen überwunden, beispielsweise durch entsprechendes, gegebenenfalls gesteuertes, Bewegen des Verstärkerkörpers 10, oder Verformung der Reaktionsscheibe 20, so bringt der Fahrer zusätzlich zur Unterstützungskraft des Bremskraftverstärkers eine Kraft zur Betätigung des Hauptbremszylinders auf.

Im gesteuerten Betriebsmodus kann der Bremskraftverstärker mittels der Einstelleinrichtung 3 betrieben werden. In diesem gesteuerten Betriebsmodus ist das Hauptsteuerventil durch die Einstelleinrichtung 3 außer Funktion gesetzt, indem das Trennventil 7 von der Steuereinheit 14 derart angesteuert wird, dass es geschlossen ist. Somit kann über das Hauptsteuerventil 5 sowie über das Trennventil 7 keine Umgebungsluft mehr in die erste Kammer 4 gelangen. Die Zufuhr von Umgebungsluft erfolgt nun über das Steuerventil 6, welches von der Steuereinheit angesteuert wird. Da das Steuerventil ein stetig stellbares Ventil ist, sind nicht nur zwei Ventilstellungen - offen bzw. geschlossen - möglich, das Ventil kann auch derart angesteuert werden, dass es sich in eine Zwischenstellung begibt. Die Zufuhr von Luft kann auch mit einem Schaltventil durchgeführt werden. Die Zufuhrmenge kann sowohl bei stetig stellbarem Steuerventil, als auch bei einem Schaltventil durch die Ansteuerung des jeweils verwendeten Ventils eingestellt werden. Unter Ansteuerung ist hierbei insbesondere an ein Ansteuerprotokoll gedacht, welches die Dauer und die Ventilstellung vorgibt. Ein solches gesteuertes Zuführen von Luft ermöglicht ein Steuern des Bremskraftverstärkers sowohl abhängig als auch unabhängig vom Fahrer.

Die Bremswirkung kann somit durch den Bremskraftverstärker und/oder durch den Fahrer hervorgerufen werden.

Zur Steuerung des Bremskraftverstärkers 1 im gesteuerten Betriebsmodus mittels der Einstelleinrichtung 3 werden dem Steuergerät 14 Signale von Sensoren zugeführt. Eine erste Sensoreinheit 8 ermittelt den Betätigungsweg des Eingangselements 24. Ebenso kann eine Größe ermittelt werden, die den Betätigungsweg des Eingangselements 24 repräsentiert.

Des Weiteren ist eine Sensoreinheit 9 vorgesehen, die den Verschiebeweg des Verstärkerkörpers 10 gegen das Verstärkergehäuse 11 oder eine den Verschiebeweg repräsentierende Größe ermittelt.

Die Signale der Sensoreinheiten 9 und 10 können kombiniert werden, und so die Relativauslenkung von Eingangsstange 24 und Verstärkerkörper 10 ermittelt werden. Ebenso kann ein Differenzwegsensor (nicht eingezeichnet) zur Bestimmung der Relativauslenkung vorgesehen sein.

Des Weiteren kann eine Sensoreinheit vorgesehen sein, die den Differenzdruck zwischen der ersten 4 und der zweiten Kammer 13 oder eine den Differenzdruck repräsentierende Größe bestimmt. Ebenso kann der Differenzdruck anhand von zwei Drucksensoren ermittelt werden, die den Druck in der jeweiligen Kammer separat ermitteln.

Das elastische Element 20 und damit das Führungsteil 21 kann nicht nur durch den Bremskraftverstärker 1 mit einer Unterstützungskraft beaufschlagt werden, ebenso kann der Fahrer das elastische Element mit einer Betätigungskraft 15 beaufschlagen. Dazu muss der oben erwähnte Leerweg jedoch überwunden sein. Durch Steuern des Bremskraftverstärkers kann eingestellt werden, wann der Leerweg überwunden wird. Dies kann ab einem bestimmten Leerweg vorgesehen sein, oder auch ab einem bestimmten Druck im hydraulischen Bremssystem, weitere Punkte zur Einstellung des Leerwegs sind denkbar.

Ein Betreiben des Bremskraftverstärkers mit der Einstelleinrichtung erfolgt nun wie folgt. Der Fahrer bringt eine Betätigungskraft 15 auf und verschiebt das Eingangselement 24. Dies signalisiert den Bremswunsch des Fahrers. Die Relativauslenkung kann unter Benutzung der oben beschriebenen Sensoreinheiten ermittelt werden. Die Relativauslenkung führt zu einer Öffnung des Hauptsteuerventils 5. Im gesteuerten Betriebsmodus steuert das Steuergerät 14 das Trennventil so an, dass es geschlossen ist. Das Hauptsteuerventil 5 hat somit keine Funktion mehr. Die ermittelte Relativauslenkung von Eingangsstange 24 und Verstärkerkörper 10 wird von dem Steuergerät 14 zur Steuerung des Bremskraftverstärkers herangezogen. Optional können, gegebenenfalls zusätzlich, die Signale des Differenzdrucksensors 12 herangezogen werden. Unter Nutzung dieser Signale steuert die Steuereinheit 14 die Einstelleinrichtung 3, genauer gesagt das Steuerventil 6 und das Trennventil 7 an. Um eine Unterstützungskraft durch den Bremskraftverstärker aufzubringen wird durch das Steuergerät das Steuerventil 6 so angesteuert, dass es öffnet und eine Verbindung zwischen Umgebungsluft und der ersten Kammer 4 hergestellt wird. Insbesondere wird das Steuerventil kontinuierlich geöffnet. Eine gepulste Öffnung ist aber ebenso denkbar. Durch die Art der Öffnung, insbesondere über die Dauer, lässt sich der resultierende Druck in der ersten Kammer 4 einstellen. Aus dem Druckunterschied zwischen der ersten Kammer 4 und der zweiten Kammer 13 resultiert nun die Unterstützungskraft des Bremskraftverstärkers.

Die Unterstützungskraft des Bremskraftverstärkers lässt sich auf diese Weise unabhängig vom Fahrer einstellen. Der Zusammenhang zwischen Fahrerbremswunsch, vorgegeben durch die Pedalposition, und somit durch den Verschiebweg des Eingangselements 24, und der eingestellten Unterstützungskraft ist frei festlegbar. Ebenso ist der Leerweg über die Steuerung des Bremskraftverstärkers einstellbar. Die Ansteuerung der Einstelleinrichtung 3 kann anhand von Kennlinien erfolgen, die im Steuergerät 14 hinterlegt sind. Beispielsweise kann der Zusammenhang zwischen einzustellendem Druck in der ersten Kammer 4 und der Relativauslenkung 14 hinterlegt sein. Die Charakteristik des Bremskraftverstärkers kann so softwareseitig eingestellt werden.

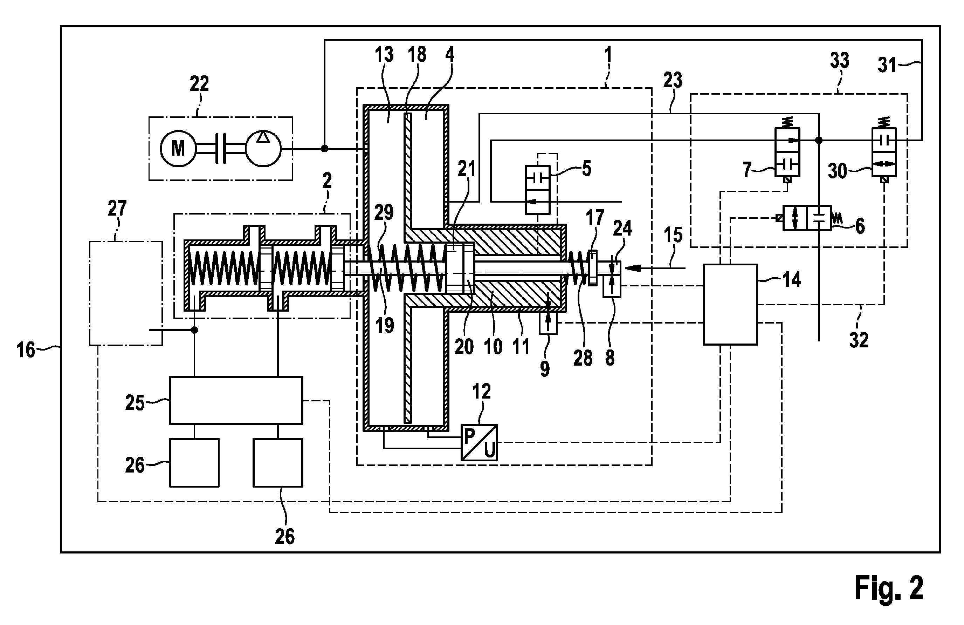

In weiterer Ausgestaltung kann der Bremskraftverstärker 1 wie in Figur 2 dargestellt mit einer Einstelleinrichtung 33 verbunden sein, welche neben den bereits in Figur 1 gezeigten Ventilen 6 und 7 ein zweites Steuerventil 30 aufweist. Das zweite Steuerventil 30 ist über eine pneumatische Verbindung mit der zweiten Kammer 13 des Bremskraftverstärkers 1 verbunden. Ebenso steht es in pneumatischer Verbindung mit dem Steuerventil 6 und dem Trennventil 7. Das zweite Steuerventil 30 ist ein stromlos geschlossenes Ventil, insbesondere ein stromlos geschlossenes stetig stellbares Ventil 30. Mittels des zweiten Steuerventils 30 kann die Unterstützungskraft des Bremskraftverstärkers 1 reduziert werden. Dazu wird bei geschlossenem Trennventil 7 und geschlossenem Steuerventil 6 das zweite Steuerventil 30 geöffnet. Über die Leitung 31 gelangt somit die erste Kammer 4 in pneumatische Verbindung mit der zweiten Kammer 13. Die pneumatische Verbindung 31 kann dabei direkt an den Bremskraftverstärker 1 angekoppelt sein, ebenso ist es denkbar, dass die Leitung 31 in eine Verbindungsleitung zwischen Vakuumquelle 22 und zweiter Kammer 13 des Bremskraftverstärkers 1 mündet. Durch Herstellen dieser Verbindung über die pneumatische Leitung 31 kann die erste Kammer 4 entweder in die zweite Kammer 13 und/oder über die Vakuumquelle 22 entlüftet werden. Da dadurch die Druckdifferenz zwischen erster Kammer 4 und zweiter Kammer 13 abnimmt reduziert sich dadurch die Unterstützungskraft des Bremskraftverstärkers 1. Die Ansteuerung des zweiten Steuerventils 30 kann wie bei der Ansteuerung der übrigen Ventile geschildert über das Steuergerät 14 erfolgen. Dazu kann das zweite Steuerventil 30 über eine Daten- /Signalleitung mit dem Steuergerät 14 verbunden sein. Die Öffnung des zweiten Steuerventils 30 kann auf unterschiedliche Arten geschehen. So kann zum einen vorgesehen sein, das zweite Steuerventil 30 kontinuierlich zu öffnen, zum anderen kann die Öffnung gepulst erfolgt. Ebenso kann der Öffnungsgrad des stetig stellbaren Steuerventils passend gewählt werden, um den Ablauf der Entlüftung einzustellen. Die Entlüftung kann dabei beispielsweise solange erfolgen, bis die gewünschte Druckdifferenz zwischen erster Kammer 4 und zweiter Kammer 13 erreicht ist. Bei der Entlüftung kann vorgesehen sein, dass die Vakuumpumpe 22 nicht betrieben wird, und die Entlüftung zuerst in die zweite Kammer 13 erfolgt. Zur Vollständigen Entlüftung kann dann auch die Vakuumpumpe wieder betrieben werden. Ebenso ist es jedoch denkbar, die Vakuumpumpe permanent zu betreiben, und somit direkt über die Vakuumquelle 22 zu entlüften.

Durch Vorsehen des zweiten Steuerventils 30 in der Einstelleinrichtung 33 zur Entlüftung der ersten Kammer 4 ist nun auch ein gezieltes/gesteuertes Entlüften und somit ein kontrollierter Unterstützungskraftabbau möglich. Die Möglichkeit, insbesondere fahrerunabhängig, Unterstützungskraft auf- sowie abzubauen kann bei Betreiben eines regenerativen Bremssystems von großer Bedeutung sein, wie weiter unten dargestellt wird. Auch ein vollständiges Entlüften der ersten Kammer 4, beispielsweise nach einer beendeten Bremsung, ist möglich.

In einer nicht dargestellten Ausführungsform kann die Einstelleinrichtung 3 auch pneumatisch direkt mit der Vakuumquelle oder auch direkt mit der zweiten Kammer 13 des Bremskraftverstärkers verbunden sein. Ein Einmünden der Leitung 31 in die Verbindung von Vakuumquelle 22 und zweiter Kammer 13 ist nicht zwingend erforderlich.

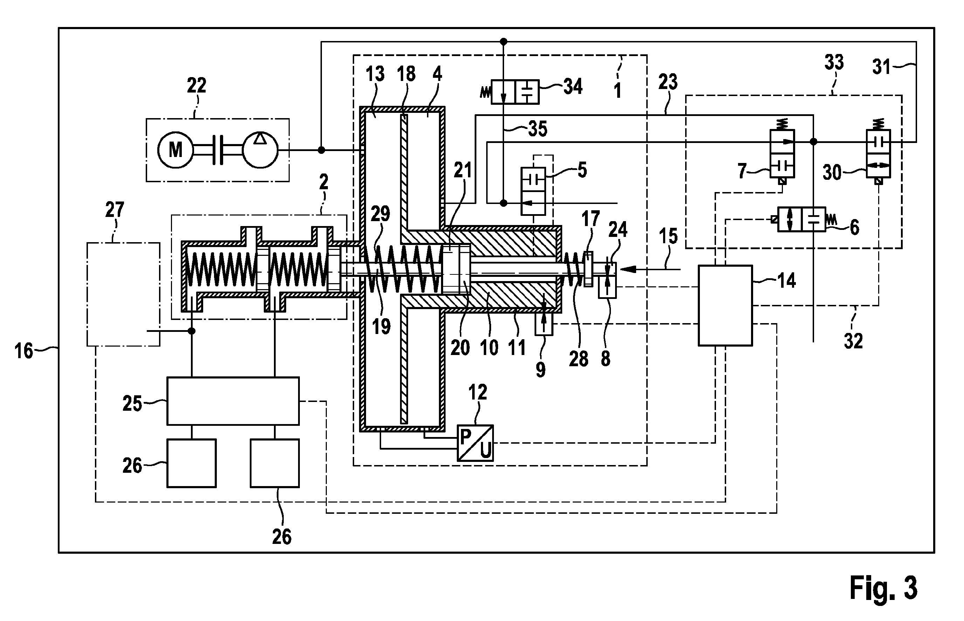

Im unbetätigten Zustand muss sowohl die erste Kammer 4 als auch die zweite Kammer 13 des Bremskraftverstärkers entlüftet sein. Dies kann durch einen nicht eingezeichneten Mechanismus in Figur 1 und 2 gewährleistet sein, der dafür sorgt, dass die erste Kammer 4 des Bremskraftverstärkers in Verbindung mit der Vakuumquelle gelangt. Ein solcher Mechanismus sowie diese Funktionalität kann beispielsweise in einem Steuerventil des Bremskraftverstärkers integriert sein. Ebenso kann wie in einer weiteren Ausführungsform basierend auf der Ausführungsform welche in Figur 2 dargestellt ist ein weiteres Trennventil 34 vorgesehen sein. Diese Ausführungsform ist in Figur 3 dargestellt. Die Anschlussweise des Trennvetils 34 lässt sich ohne Einschränkung auf die erste Ausführungsform aus Figur 1 übertragen und wird aus diesem Grund nicht weiter dargestellt. Hier muss jedoch eine weitere Verbindung zur Vakuumquelle 22 und/oder zur zweiten Kammer 13 vorgesehen werden.

Über eine pneumatische Verbindung 35 ist das Trennventil 34 mit dem Hauptsteuerventil 5 sowie der Einstelleinrichtung 33, beziehungsweise in der ersten Ausführungsform der Einstelleinrichtung 3, verbunden. Dabei mündet die Verbindung 35 auf Seiten der Einstelleinrichtung in das Ventil 7. Das Trennventil 34 ist ein stromlos geöffnetes Schaltventil. Außerdem ist das Trennventil 34 mit der Leitung 31, beziehuhngsweise mit der eben genannten weiteren Verbindung in der ersten Ausführungsform pneumatisch verbunden. Mittels desTrennventils 34 ist eine unterbrechbare Verbindung der Vakuumversorgung 22 und der ersten Kammer 4 darstellbar. Diese Verbindung erfolgt dabei über das stromlos offene Trennventil 7. Das Ventil 34 wird mechanisch bei Betätigung des Bremskraftverstärkers über das Bremspedal geschlossen.

Bei Betätigung der Bremse zur Durchführung eines Bremsvorgangs wird zunächst das Ventil 34 betätigt und so die Verbindung zur Vakuumversorgung 34 unterbrochen. Dann wird die erste Kammer belüftet, entweder über das Hauptsteuerventil 5 oder wie bereits geschildert über die Einstelleinrichtung 3 beziehungsweise 33. Dadurch entsteht ein Differenzdruck welcher die Unterstützungskraft des Bremskraftverstärkers 1 hervorbringt.

Zusätzlich zur Entlüftung der ersten Kammer 4 über dasTrennventil 34 in unbetätigtem Zustand des Bremksraftverstärkers 1 ist durch das Trennventil 34 eine Absicherung für den Fall einer Leckage des Hauptsteuerventils 5 oder des Steuerventils 6 gegeben. Sollte ein unbeabsichtigter Lufteinlass an dem Steuerventil 6 und/oder an dem Hauptsteuerventil 5 vorliegen, so könnte das zu einer unbeabsichtigten Bremsung führen. Einem unbeabsichtigten Belüften der ersten Kammer 4 kann mittels der Vakuumquelle entgegengewirkt werden. Die Verbindung des von der Leckage betroffenen Ventils 5 und/oder 6 mit der Vakuumquelle kann dabei alleine über das Ventil 35 erfolgen, oder zusätzlich noch über das Trennventil 7.

Ebenso ist es möglich in der zweiten Ausführungsform den Schutz vor Leckage des Hauptsteuerventils 5 oder des Steuerventils 6 über das Ventil 30 sowie die Leitung 31 zu gewährleisten. Dabei muss dann jedoch das Ventil 30 vom Steuergerät angesteuert werden, da das Ventil 30 ein stromlos geschlossenes Ventil ist. Die Verbindung von der ersten Kammer zur Vakuum-Versorgung (22) erfolgt dabei über die Leitung 23.

Generell ist eine Verbindung des Hauptsteuerventils 5 sowie des Steuerventils 6 mit der Vakkumversorgung 22 sowohl über das Ventil 30 als auch über das Ventil 34, als auch über beide Ventile gleichzeitig möglich.

Durch die Möglichkeit die Unterstützungskraft des Bremskraftverstärkers über die Einstelleinrichtung 3 einzustellen kann der Bremskraftverstärker 1 in einer Gesamtbremsanlage zur Anwendung kommen, die neben dem hydraulischen Bremssystem ein weiteres, beispielsweise regeneratives Bremssystem umfasst. Ändert sich der Anteil des regenerativen Bremssystems an der Gesamtbremswirkung, so muss die Bremswirkung des hydraulischen Bremssystems an die Änderung, insbesondere an die nach der Änderung vorliegende Bremswirkung des regenerativen Bremssystems angepasst werden. Dazu kann die Unterstützungskraft des Bremskraftverstärkers durch die Einstelleinrichtung reduziert oder erhöht werden um somit die Bremswirkung anzupassen. Die aus der Reduktion der Unterstützungskraft resultierende Druckänderung im hydraulischen Bremssystem kann dazu führen, dass das Eingangselement 24 und somit das Bremspedal versetzt wird. Um einen solchen Versatz zu verhindern kann mittels der eingangs erwähnten Anpassungsvorrichtung 27 Volumen an Bremsflüssigkeit aus dem Bremssystem entnommen werden und/oder diesem hinzugeführt werden, und so der Versatz des Eingangselements verhindert werden.

Im Fall eines Ausfalls der Stromversorgung des Fahrzeugs oder des Steuergeräts / der Einstelleinrichtung kann der Bremskraftverstärker wieder regulär im mechanischen Betriebsmodus betrieben werden. Dies ist gewährleistet durch das stromlos geöffnete Trennventil 7 und das stromlos geschlossene Steuerventil 6. Bei der weiteren Ausführungsform ist durch das stromlos geschlossene zweite Steuerventil 30 ebenfalls die Möglichkeit gegeben den Bremskraftverstärker in gewohnter Weise mechanisch zu betätigen, ohne die Einstelleinrichtung.

Die oben genannten Betriebsmodi schließen einander im Verlauf einer Bremsung nicht aus. Es ist möglich die Betriebsmodi aneinanderzureihen, beispielsweise kann zuerst bei niedrigem Bremsdruck auf herkömmliche Weise gebremst werden, also im zweiten Betriebsmodus, und dann erst auf den gesteuerten Betriebsmodus umgeschaltet werden, umgekehrt ebenso. Dadurch ist eine Verstärkerkennlinie darstellbar, die sehr variabel ist. Ebenso denkbar ist ein Überlappen der Betriebsmodi, für den Fall, dass keine vollständige Abkopplung des Hauptsteuerventils 5 durch das Trennventil 7 erfolgt. Somit kann die erste Kammer des Bremskraftverstärkers sowohl über das Steuerventil 6, als auch über das Hauptsteuerventil 5 belüftet werden. In diesem Fall müsste das Trennventil 7 jedoch als stetig stellbares Ventil vorgesehen sein.

Ebenso ist es möglich den Bremskraftverstärker mit der Einstelleinrichtung 3 aktiv zu betreiben, wenn die Steuereinheit Signale zur Steuerung verwendet, die nicht vom Fahrer abhängen. Vorstellbar sind Automatische Notbremsungen, Bremseingriffe zur Abstandskontrolle zu vorausfahrenden Fahrzeugen oder auch Funktionen wie ein Bremsscheibenwischer.

Bei Betätigung der Bremsanlage über das Eingangselement 24 spürt der Fahrer in der Regel eine Rückwirkung, welche unterschiedliche Rückwirkungen umfasst, beispielsweise die der Rückstellfedern (29, 28) sowie die Rückwirkung des hydraulischen Bremssystems selber über den Hauptbremszylinder 2, die Kolbenstange 19, das Führungsteil 21 und die Reaktionsscheibe 20.

Durch Betreiben der Anpassungsvorrichtung 27 bei einer sich ändernden Bremswirkung des regenerativen Bremssystems ändert sich die Rückwirkung des hydraulischen Bremssystems. Durch Änderung der Unterstützungskraft des Bremskraftverstärkers kann die Änderung der Rückwirkung des hydraulischen Bremssystems vor dem Fahrer versteckt werden.

Auf diese Weise lässt sich nicht nur die Positionierung des Eingangselements wie oben beschrieben festhalten sondern es ist auch gewährleistet, dass der Fahrer immer bei einer vorliegenden Betätigungsposition die von ihm erwartete Rückwirkung erfährt. Der erfindungsgemäße Bremskraftverstärker kann somit nicht nur als steuerbarer Bremskraftverstärker eingesetzt werden, sondern auch in Verbindung mit der Anpassungseinheit als Pedalgefühlsimulator bei Verblenden eines Generatormoments bei regenerativem Bremsen.

Bei allen gezeigten Ausführungsformen sind der Bremskraftverstärker 1 und der Hauptbremszylinder 2 mit ein und demselben Gehäuse dargestellt. Dies ist nicht zwingend notwendig. Ebenso kann der Bremskraftverstärker sowie der Hauptbremszylinder ein eigenes Gehäuse aufweisen und somit als getrennte Bauteile vorliegen.

## Patentansprüche

1. Vakuum-Bremskraftverstärker (1) der einen Hauptzylinder mit einer Unterstützungskraft beaufschlagt **dadurch gekennzeichnet, dass** der Vakuum-Bremskraftverstärker eine Einstellvorrichtung (3) zum Einstellen der Unterstützungskraft sowie ein Hauptsteuerventil (5) zum Einstellen der Unterstützungskraft aufweist, wobei in einem ersten Betriebsmodus die Unterstützungskraft durch die Einstelleinrichtung (3) eingestellt wird und in einem zweiten Betriebsmodus durch das Hauptsteuerventil (5) eingestellt wird, **dadurch gekennzeichnet, dass** die Einstellvorrichtung (3)
- pneumatisch mit einer ersten Kammer (4) des Bremskraftverstärkers (1) sowie einem Hauptsteuerventil (5) des Vakuum-Bremskraftverstärkers (1) verbunden ist sowie
- pneumatisch mit einer zweiten Kammer (13) und/oder mit einer Vakuumquelle (22) des Bremskraftverstärkers (1) verbunden ist.

2. Vakuum-Bremskraftverstärker nach Anspruch 1, **dadurch gekennzeichnet, dass** die Einstellvorrichtung (3)
- erste Unterbrechungsmittel (6) zum Unterbrechen der pneumatischen Verbindung der Einstelleinrichtung (3) mit der Umgebung und
- zweite Unterbrechungsmittel (7) zum Unterbrechen der pneumatischen Verbindung zwischen der Einstelleinrichtung und dem Hauptsteuerventil (5)
aufweist, wobei das erste Unterbrechungsmittel (6) ein stromlos geschlossenes Ventil, insbesondere ein stetig stellbares Ventil ist und das zweite Unterbrechungsmittel (7) ein stromlos offenes Ventil, insbesondere ein Schaltventil ist.

3. Vakuum-Bremskraftverstärker nach Anspruch 1 und 2, **dadurch gekennzeichnet, dass** die Einstellvorrichtung 3 dritte Unterbrechungsmittel (30) zum Unterbrechen der pneumatischen Verbindung der Einstelleinrichtung (3) mit der zweiten Kammer (13) des Bremskraftverstärkers (1) und/oder der Vakuumquelle (22) aufweist, wobei das dritte Unterbrechungsmittel (30) ein stromlos geschlossenes Ventil, insbesondere ein stetig stellbares Ventil ist.

4. Vakuum-Bremskraftverstärker (1) nach Anspruch 1, **dadurch gekennzeichnet, dass** der Vakuum-Bremskraftverstärker (1) erste Mittel (8) zur Bestimmung einer Position eines Eingangselements (17) zur Aufnahme einer vom Fahrer aufgebrachten Betätigungskraft sowie zweite Mittel (9) zur Bestimmung einer Position eines Verstärkerkörpers (10) in Bezug auf ein Gehäuse (11) des Vakuum-Bremskraftverstärkers (1) aufweist.

5. Vakuum-Bremskraftverstärker (1) nach Anspruch 1, **dadurch gekennzeichnet, dass** der Vakuum-Bremskraftverstärker (1) Mittel zur Bestimmung einer relativen Auslenkung eines Eingangselements (17) zur Aufnahme einer vom Fahrer aufgebrachten Betätigungskraft und eines Verstärkerkörpers (10) aufweist.

6. Vakuum Bremskraftverstärker (1) nach Anspruch 1, **dadurch gekennzeichnet, dass** der Bremskraftverstärker Mittel (12) zur Bestimmung eines Differenzdrucks zwischen der ersten (4) und einer zweiten Kammer (13) des Vakuum-Bremskraftverstärkers (1) aufweist.

7. Vakuum-Bremskraftverstärker nach wenigstens einem der oben genannten Ansprüche, **dadurch gekennzeichnet, dass** die Unterstützungskraft des Bremskraftverstärker über ein Steuergerät (14) eingestellt wird, welches wenigstens die ersten (6) und zweiten (7) Unterbrechungsmittel steuert, insbesondere unter Verwendung von Signalen der ersten (8) und zweiten (9) Mittel zur Bestimmung der Position des Eingangselements beziehungsweise des Verstärkerkörpers und/oder der Mittel (nicht eingezeichnet) zur Bestimmung einer relativen Auslenkung eines Eingangselements (17) und eines Verstärkerkörpers (10) und/oder der Mittel (12) zur Bestimmung eines Differenzdrucks.

8. Vakuum-Bremskraftverstärker nach Anspruch 7, **dadurch gekennzeichnet, dass** die Unterstützungskraft des Bremskraftverstärker über ein Steuergerät (14) eingestellt wird, welches wenigstens die ersten (6) und zweiten (7) und die dritten (30) Unterbrechungsmittel steuert.

9. Vakuum-Bremskraftverstärker nach Anspruch 1, **dadurch gekennzeichnet, dass** der Vakuum-Bremskraftverstärker (1) Mittel (34) aufweist, mittels derer die erste Kammer (4) des Bremskraftverstärkers (1) mit der Vakuumquelle unterbrechbar verbunden ist, insbesondere eine mittels eines vierten Unterbrechungsmittels (34) unterbrechbare pneumatische Verbindung (35).

10. Verfahren zum Betreiben eines Vakuum-Bremskraftverstärkers (1) nach wenigstens einem der oben genannten Ansprüche, **dadurch gekennzeichnet, dass** in einem ersten Betriebsmodus des Bremskraftverstärkers die aufgebrachte Unterstützungskraft bei unterbrochener pneumatischer Verbindung zwischen der Einstelleinrichtung (3) und dem Hauptsteuerventil (5) durch Herstellen der pneumatischen Verbindung zwischen der Umgebung und der Einstelleinrichtung (3) eingestellt wird.

11. Verfahren nach Anspruch 10, **dadurch gekennzeichnet, dass** die aufgebrachte Unterstützungskraft bei unterbrochener pneumatischer Verbindung zwischen der Einstelleinrichtung (3) und dem Hauptsteuerventil (5) durch Herstellen der pneumatischen Verbindung zwischen
- der Umgebung und der Einstelleinrichtung (3) oder
- der Einstelleinrichtung (3) und der zweiten Kammer (13) des Bremskraftverstärkers (1) und/oder der Vakuumquelle (22) eingestellt wird.

12. Verfahren nach Anspruch 10, **dadurch gekennzeichnet, dass** das Herstellen und/oder Unterbrechen der pneumatischen Verbindungen durch Steuern der ersten (6) und zweiten (7) Unterbrechungsmittel geschieht.

13. Verfahren nach Anspruch 11, **dadurch gekennzeichnet, dass** das Herstellen und/oder Unterbrechen der pneumatischen Verbindungen durch Steuern der ersten (6), zweiten (7) und dritten (30) Unterbrechungsmittel geschieht.

14. Verfahren nach Anspruch 10 oder 11, **dadurch gekennzeichnet, dass** die Bestimmung der einzustellenden Unterstützungskraft unter Berücksichtigung von Signalen der ersten und zweiten Mittel zur Bestimmung der Position des Eingangselements beziehungsweise der Position des Verstärkerkörpers erfolgt und/oder unter Verwendung der Mittel (nicht eingezeichnet) zur Bestimmung der relativen Auslenkung des Eingangselements (17) und des Verstärkerkörpers (10).

15. Verfahren nach Anspruch 10 oder 11, **dadurch gekennzeichnet, dass** die Bestimmung der einzustellenden Unterstützungskraft unter Berücksichtigung von Signalen der Mittel (12) zur Bestimmung eines Differenzdrucks zwischen der ersten (4) und der zweiten Kammer (13) des Vakuum-Bremskraftverstärkers erfolgt.

16. Verfahren nach Anspruch 10 oder 11, **dadurch gekennzeichnet, dass** der Zusammenhang zwischen einzustellender Unterstützungskraft sowie der Position des Eingangselements vorgebbar ist, insbesondere in Form wenigstens einer Kennlinie in dem Steuergerät (14) des Bremskraftverstärkers.

17. Verfahren nach Anspruch 10 oder 11, **dadurch gekennzeichnet, dass** in dem zweiten Betriebsmodus, insbesondere im Fall eines Ausfalls der Einstelleinrichtung (3), die pneumatische Verbindung zwischen der Einstelleinrichtung (3) und dem Hauptsteuerventil (5) geöffnet ist, wobei die ersten Unterbrechungsmittel (6) geschlossen sind und die Unterstützungskraft durch Betätigen des Hauptsteuerventils (5) eingestellt wird.

18. Verfahren nach Anspruch 11 und 17, **dadurch gekennzeichnet, dass** in dem zweiten Betriebsmodus die dritten Unterbrechungsmittel (30) geschlossen sind.

19. Verfahren nach Anspruch 17, **dadurch gekennzeichnet, dass** das Hauptsteuerventil (5) vom Fahrer mittels Muskelkraft (15) betätigt wird.

20. Verfahren nach Anspruch 10 oder 11, wobei der Vakuum-Bremskraftverstärker (1) Teil eines hydraulischen Bremssystems (16) einer Gesamtbremsanlage ist, wobei die Gesamtbremsanlage neben dem hydraulischen Teilbremssystem (16) ein weiteres Teilbremssystem aufweist **dadurch gekennzeichnet, dass** die Bremswirkung des hydraulischen Bremssystems an eine Änderung der Bremswirkung des weiteren Teilbremssystems durch Einstellen der Unterstützungskraft des Vakuum-Bremskraftverstärkers (1) angepasst wird.

21. Verfahren nach Anspruch 10 oder 11, **dadurch gekennzeichnet, dass** die erste Kammer des Bremskraftverstärkers im unbetätigten Zustand über das vierte Unterbrechungsmittel (34) und /oder über das dritte Unterbrechungsmittel (30) mit der Vakuumquelle (22) verbunden ist.

## Claims

1. Vacuum brake booster (1) which applies an assistance force to a main cylinder, **characterized in that** the vacuum brake booster has a setting device (3) for setting the assistance force and a main control valve (5) for setting the assistance force, wherein in a first operating mode the assistance force is set by means of the setting device (3), and in a second operating mode it is set by means of the main control valve (5), **characterized in that** the setting device (3)
- is connected pneumatically to a first chamber (4) of the brake booster (1) and to a main control valve (5) of the vacuum brake booster (1), and
- is connected pneumatically to a second chamber (13) and/or to a vacuum source (22) of the brake booster (1).

2. Vacuum brake booster according to Claim 1, **characterized in that** the setting device (3)
- has a first disconnection means (6) for disconnecting the pneumatic connection of the setting device (3) to the surroundings, and
- a second disconnection means (7) for disconnecting the pneumatic connection between the setting device and the main control valve (5),
wherein the first disconnection means (6) is a valve which is closed in the currentless state, in particular a continuously adjustable valve, and the second disconnection means (7) is a valve which is open in the currentless state, in particular a switching valve.

3. Vacuum brake booster according to Claims 1 and 2, **characterized in that** the setting device (3) has third disconnection means (30) for disconnecting the pneumatic connection of the setting device (3) to the second chamber (13) of the brake booster (1) and /or of the vacuum source (22), wherein the third disconnection means (30) is a valve which is closed in the currentless state, in particular a continuously adjustable valve.

4. Vacuum brake booster (1) according to Claim 1, **characterized in that** the vacuum brake booster (1) has first means (8) for determining a position of an input element (17) for taking up an activation force applied by the driver, and second means (9) for determining a position of a booster body (10) with respect to a housing (11) of the vacuum brake booster (1).

5. Vacuum brake booster (1) according to Claim 1, **characterized in that** the vacuum brake booster (1) has means for determining relative deflection of an input element (17) for taking up an activation force applied by the driver, and a booster body (10).

6. Vacuum brake booster (1) according to Claim 1, **characterized in that** the brake booster has means (12) for determining a differential pressure between the first chamber (4) and a second chamber (13) of the vacuum brake booster (1).

7. Vacuum brake booster according to at least one of the abovementioned claims, **characterized in that** the assistance force of the brake booster is set by means of a control device (14) which controls at least the first disconnection means (6) and the second disconnection means (7), in particular using signals of the first means (8) and second means (9) for determining the position of the input element or of the booster body and/or the means (not shown) for determining a relative deflection of an input element (17) and of a booster body (10) and/or the means (12) for determining a differential pressure.

8. Vacuum brake booster according to Claim 7, **characterized in that** the assistance force of the brake booster is set by means of a control device (14) which controls at least the first disconnection means (6) and second disconnection means (7) and the third disconnection means (30).

9. Vacuum brake booster according to Claim 1, **characterized in that** the vacuum brake booster (1) has means (34) by means of which the first chamber (4) of the brake booster (1) is connected to the vacuum source in disconnectable fashion, in particular a pneumatic connection (35) which can be disconnected by means of a fourth disconnection means (34).

10. Method for operating a vacuum brake booster (1) according to at least one of the abovementioned claims, **characterized in that** in a first operating mode of the brake booster the applied assistance force is set, when the pneumatic connection between the setting device (3) and the main control valve (5) is disconnected, by establishing the pneumatic connection between the surroundings and the setting device (3).

11. Method according to Claim 10, **characterized in that** the applied assistance force is set, when the pneumatic connection between the setting device (3) and the main control valve (5) is disconnected, by establishing the pneumatic connection between
- the surroundings and the setting device (3) or
- the setting device (3) and the second chamber (13) of the brake booster (1) and/or of the vacuum source (22).

12. Method according to Claim 10, **characterized in that** the pneumatic connections are established and/or disconnected by controlling the first disconnection means (6) and second disconnection means (7).

13. Method according to Claim 11, **characterized in that** the pneumatic connections are established and/or disconnected by controlling the first disconnection means (6), second disconnection means (7) and third disconnection means (30).

14. Method according to Claim 10 or 11, **characterized in that** the assistance force which is to be set is determined taking into account signals of the first and second means for determining the position of the input element or the position of the booster body and/or using the means (not shown) for determining the relative deflection of the input element (17) and of the booster body (10).

15. Method according to Claim 10 or 11, **characterized in that** the assistance force which is to be set is determined taking into account signals of the means (12) for determining a differential pressure between the first chamber (4) and the second chamber (13) of the vacuum brake booster.

16. Method according to Claim 10 or 11, **characterized in that** the relationship between the assistance force which is to be set and the position of the input element can be predefined, in particular in the form of at least one characteristic curve in the control device (14) of the brake booster.

17. Method according to Claim 10 or 11, **characterized in that** in the second operating mode, in particular in the event of a failure of the setting device (3), the pneumatic connection between the setting device (3) and the main control valve (5) is opened, wherein the first disconnection means (6) are closed and the assistance force is set by activating the main control valve (5).

18. Method according to Claims 11 and 17, **characterized in that** in the second operating mode the third disconnection means (30) are closed.

19. Method according to Claim 17, **characterized in that** the main control valve (5) is activated by the driver by means of muscle force (15).

20. Method according to Claim 10 or 11, wherein the vacuum brake booster (1) is part of a hydraulic brake system (16) of an overall brake installation,
wherein the overall brake installation has, in addition to the hydraulic partial brake system (16), a further partial brake system, **characterized in that** the braking effect of the hydraulic brake system is adapted to a change in the braking effect of the further partial brake system by setting the assistance force of the vacuum brake booster (1).

21. Method according to Claim 10 or 11, **characterized in that** in the unactivated state the first chamber of the brake booster is connected to the vacuum source (22) via the fourth disconnection means (34) and/or via the third disconnection means (30).

## Revendications

1. Servofrein à vide (1) alimentant un cylindre principal avec une force de renfort, **caractérisé en ce que** le servofrein à vide comporte un dispositif de réglage (3) servant au réglage de la force de renfort ainsi qu'une soupape de commande principale (5) servant au réglage de la force de renfort, sachant que dans un premier mode de fonctionnement, la force de renfort est réglée par le dispositif de réglage (3) et que dans un deuxième mode de fonctionnement, elle est réglée par la soupape de commande principale (5), **caractérisé en ce que** le dispositif de réglage (3) est relié sur le plan pneumatique à une première chambre (4) du servofrein (1) ainsi qu'à une soupape de commande principale (5) du servofrein à vide (1) ainsi que sur le plan pneumatique à une deuxième chambre (13) et/ou à une source de vide (22) du servofrein (1).

2. Servofrein à vide selon la revendication 1, **caractérisé en ce que** le dispositif de réglage (3) comporte :
- un premier moyen d'interruption (6) permettant d'interrompre la liaison pneumatique du dispositif de réglage (3) avec l'environnement ; et
- un deuxième moyen d'interruption (7) permettant d'interrompre la liaison pneumatique entre le dispositif de réglage et la soupape de commande principale (5) ;
le premier moyen d'interruption (6) étant une soupape fermée sans débit, notamment une soupape réglable en continu et le deuxième moyen d'interruption (7) étant une soupape ouverte sans débit, notamment une soupape de connexion.

3. Servofrein à vide selon la revendication 1 et 2, **caractérisé en ce que** le dispositif de réglage 3 comporte un troisième moyen d'interruption (30) permettant d'interrompre la liaison pneumatique du dispositif de réglage (3) avec la deuxième chambre (13) du servofrein (1) et/ou la source de vide (22), le troisième moyen d'interruption (30) étant une soupape fermée sans débit, notamment une soupape réglable en continu.

4. Servofrein à vide (1) selon la revendication 1, **caractérisé en ce que** le servofrein à vide (1) comporte un premier moyen (8) permettant de déterminer une position d'un élément d'entrée (17) servant à recevoir une force d'actionnement appliquée par le conducteur ainsi qu'un deuxième moyen (9) servant à déterminer une position d'un corps d'amplificateur (10) par rapport à un carter (11) du servofrein à vide (1).

5. Servofrein à vide (1) selon la revendication 1, **caractérisé en ce que** le servofrein à vide (1) comporte un moyen servant à déterminer un alignement relatif d'un élément d'entrée (17) permettant de recevoir une force d'actionnement appliquée par le conducteur et un corps d'amplificateur (10).

6. Servofrein à vide (1) selon la revendication 1, **caractérisé en ce que** le servofrein comporte un moyen (12) servant à déterminer une pression différentielle entre la première (4) et une deuxième chambre (13) du servofrein à vide (1).

7. Servofrein à vide selon au moins l'une quelconque des revendications précédentes, **caractérisé en ce que** la force de renfort du servofrein est réglée via un appareil de commande (14) commandant au moins le premier (6) et le deuxième (7) moyen d'interruption, notamment en utilisant des signaux du premier (8) et du deuxième (9) moyen pour déterminer la position de l'élément d'entrée et/ou du corps d'amplificateur et/ou des moyens (sans référence) pour déterminer un alignement relatif d'un élément d'entrée (17) et d'un corps d'amplificateur (10) et/ou des moyens (12) servant à déterminer une pression différentielle.

8. Servofrein à vide selon la revendication 7, **caractérisé en ce que** la force de renfort du servofrein est réglée via un appareil de commande (14) commandant au moins les premier (6) et deuxième (7) et troisième (30) moyens.

9. Servofrein à vide selon la revendication 1, **caractérisé en ce que** le servofrein à vide (1) comporte des moyens (34) à l'aide desquels la première chambre (4) du servofrein (1) est reliée de façon interruptible à la source de vide, notamment par le biais d'une liaison (35) pneumatique interruptible à l'aide d'un quatrième moyen d'interruption (34).

10. Procédé d'entraînement d'un servofrein à vide (1) selon au moins l'une quelconque des revendications précédentes, **caractérisé en ce que** dans un premier mode de fonctionnement du servofrein, la force de renfort appliquée lorsque la liaison pneumatique est interrompue entre le dispositif de réglage (3) et la soupape de commande principale (5) est réglée par mise en place de la liaison pneumatique entre l'environnement et le dispositif de réglage (3).

11. Procédé selon la revendication 10, **caractérisé en ce que** la force de renfort appliquée en cas de liaison pneumatique interrompue entre le dispositif de réglage (3) et la soupape de commande principale (5) est réglée par mise en place de la liaison pneumatique entre l'environnement et le dispositif de réglage (3) ou le dispositif de réglage (3) et la deuxième chambre (13) du servofrein (1) et/ou de la source de vide (22).

12. Procédé selon la revendication 10, **caractérisé en ce que** la mise en place et/ou l'interruption des liaisons pneumatiques se produit par commande des premier (6) et deuxième (7) moyens d'interruption.

13. Procédé selon la revendication 11, **caractérisé en ce que** la mise en place et/ou l'interruption des liaisons pneumatiques se produit par commande des premier (6), deuxième (7) et troisième (30) moyens d'interruption.

14. Procédé selon la revendication 10 ou 11, **caractérisé en ce que** la détermination de la force de renfort à régler se produit en tenant compte des signaux des premier et deuxième moyens pour déterminer la position de l'élément d'entrée et/ou la position du corps d'amplificateur et/ou en utilisant des moyens (sans référence) servant à déterminer l'alignement relatif de l'élément d'entrée (17) et du corps d'amplificateur (10).

15. Procédé selon la revendication 10 ou 11, **caractérisé en ce que** la détermination de la force de renfort à régler se produit en tenant compte des signaux des moyens (12) servant à déterminer une pression différentielle entre la première (4) et la deuxième chambre (13) du servofrein à vide.

16. Procédé selon la revendication 10 ou 11, **caractérisé en ce que** le rapport entre la force de renfort à régler ainsi que la position de l'élément d'entrée est prédéfinissable, notamment sous la forme d'au moins une courbe caractéristique dans l'appareil de commande (14) du servofrein.

17. Procédé selon la revendication 10 ou 11, **caractérisé en ce que** dans le deuxième mode de fonctionnement, notamment en cas de panne du dispositif de réglage (3), la liaison pneumatique entre le dispositif de réglage (3) et la soupape de commande principale (5) est ouverte, sachant que les premiers moyens d'interruption (6) sont fermés et que la force de renfort est réglée par actionnement de la soupape de commande principale (5).

18. Procédé selon la revendication 11 et 17, **caractérisé en ce que** dans le deuxième mode de fonctionnement, les troisièmes moyens d'interruption (30) sont fermés.

19. Procédé selon la revendication 17, **caractérisé en ce que** la soupape de commande principale (5) est actionnée par le conducteur par le biais de sa force musculaire (15).

20. Procédé selon la revendication 10 ou 11, le servofrein à vide (1) faisant partie d'un système hydraulique de freinage (16) d'une installation de frein totale, l'installation de frein totale comportant, outre le système hydraulique de freinage (16), un système de freinage supplémentaire, **caractérisé en ce que** l'effet de freinage du système hydraulique de freinage est adapté, au niveau d'une variation de l'effet de freinage du système de freinage partiel, par réglage de la force de renfort du servofrein à vide (1).

21. Procédé selon la revendication 10 ou 11, **caractérisé en ce que** la première chambré du servofrein est reliée, à l'état non actionné, à la source de vide (22) via le quatrième moyen d'interruption (34) et/ou via le troisième moyen d'interruption (30).
